# EUROPEAN PATENT APPLICATION

(11) **EP 2 140 757 A2**
(43) Date of publication of application: **06.01.2010**
(21) Application number: 09162597.0
(22) Date of filing: 12.06.2009
(51) Int. Cl.: A01K 1/12, A01K 1/02

(54) **A retention device for a rotary milking parlour**

(30) Priority: 30.06.2008 SE 0801542
(71) Applicant: DeLaval Holding AB, 147 21 Tumba (SE)
(72) Inventor: Eden, Henric, Hamilton (NZ)
(74) Representative: Israelsson, Stefan

(57) **Abstract**

The invention relates to a retention device for a rotary milking parlour. The retention device comprises a flexible loop member (16) supported by a frame construction (14) which is movable between a retention position in which the flexible loop member (16) prevents an animal (1) from leaving the milking stall (6) and a non-retention position in which an animal (1) is allowed to leave the milking stall (6). At least one part (16a) of the flexible loop member is displaceable to different positions within a limited area by a force of an animal in the milking stall. The frame construction is provided with elastic properties such that a support part (14a) of the frame construction supporting said part of the flexible loop member is able to be displaced by the supported part (16a) of the flexible loop member to all positions within said limited area by means of elastic deflection.

## Description

### THE BACKGROUND OF THE INVENTION AND PRIOR ART

The present invention relates to a retention device for a rotary milking parlour, wherein the rotary parlour comprises an annular platform and fence arrangements adapted to divide the platform into milking stalls for receiving individual animals, wherein the retention device comprises a flexible loop member, a frame construction having at least one support part adapted to support a part of the flexible loop member such that the frame construction supports the flexible loop member, and operating means adapted to move the frame construction between a retention position in which the flexible loop member prevents an animal from leaving the milking stall and a non-retention position in which an animal is allowed to leave the milking stall, and wherein an animal in the milking stall is able to apply a force on the flexible loop member when it is in the retention position.

A conventional rotary milking parlour comprises an annular rotating platform with milking stalls. The cows enter the milking stall from an entry area. An operator located on the inside or on the outside of the annular platform attaches milking members to the teats of the cows. The platform may rotate continuously with a constant low speed. When the platform has been rotated nearly one revolution, the milking member is removed and the cows leave the platform to an exit area. However, the milking time of individual cows varies. Usually, the speed of the platform is dimensioned such that the milking processes of all cows have to be finished when the platform has rotated one revolution.

It is known to provide the milking stalls with retention devices. The object of the retention devices is to prevent the cows from leaving the milking stalls after one revolution on the platform. A retention device may prevent a cow from leaving a milking stall by several reasons such as if the milking process of a cow not has been finished or if a cow has to be subjected to any kind of treatment after the milking process. Furthermore, it is possible to use the retention devices for keeping infected cows in the milking stall. In this case, the infected milking cows may be milked at the same time just before a cleaning process of the milking stalls has to be performed. Thereby, the risk is eliminated that a healthy cow catches an infection in a milking stall. The use of retention devices in the milking stalls makes it possible to increase the speed of the platform and to make the rotary milking parlour more efficient.

A known retention device comprises a flexible loop member supported by a frame construction. The frame construction is pivotally connected to fence arrangements on opposite sides of the milking stall. An operating cylinder turns the frame construction between a retention position and a non-retention position. The flexible loop member is lowered behind a cow in the milking stall in the retention position such that the flexible loop member prevents the cow from leaving the milking stall. The flexible loop member is raised to a level in the non-retention position such that a cow is free to leave the milking stall. However, if a cow tries to leave the milking stall after one revolution of the platform with the retention device in the retention position, a lot of pressure will be applied to the retention device. In this case, there is a risk that the frame construction will be deformed by said pressure.

It is also known to use retention devices in the form of flexible loop members without support of frame constructions. Due to the flexible properties of the flexible loop member, such a loop member without a stiffening frame construction has to be mounted in the vicinity of the outer periphery of the platform. In order to allow free passage of the head of a cow in a non-retention position, it has to be pivotally attached to an axis at a relatively high level. In this case, the flexible loop members may be pivotally attached to high cabinets arranged at an outer periphery of the platform. However such high cabinets at an outer periphery of the platform make it difficult for the cows to enter and leave the milking stalls. A vacuum cylinder is, via a wire, connected to the flexible loop member and moves it between a retention position and a non-retention position. The vacuum cylinder is arranged on a relatively high level vertically above a center portion of the milking stall.

### SUMMARY OF THE INVENTION

The object of the present invention is to achieve a retention device having a frame construction supporting a flexible loop member where the frame construction will not be plastically deformed by forces acting on the flexible loop member such that it returns to its original shape when the forces are ceased. Another object of the invention is to provide a frame construction which is light and inexpensive to manufacture.

This object is achieved by the rotary parlour initially defined, which is **characterised in that** the supported part of the loop member is displaceable to different positions within a limited area by a force of an animal in the milking stall, wherein the frame construction is provided with elastic properties such that the support part of the frame construction is able to be displaced by said part of the flexible loop member to all positions within said limited area by means of elastic deflection such that the frame construction returns to its original shape when said force ceases. A cow can apply a heavy force to the loop member. Many times, such a force tends to displace the supported part of the flexible loop member from its position in an unloaded state. In this case, the supported part of the flexible loop member exerts a force on the support part of the frame construction. However, the supported part of the loop member is displaceable to different positions within a limited area by said force. By a suitable dimensioning and mounting of the flexible loop member and the frame construction, such a limited area can be made relatively small. It is possible to estimate such a limited area for the supported part of the flexible loop member in a loaded state. According to the invention, the frame construction is provided with elastic properties such that the support part of the frame construction is displaceable by the supported part of the flexible loop member to all positions within the limited area by means of elastic deflection. Since the support part of the frame element is able to deflect elastically to all possible position within the limited area, the risk that the frame construction will be plastically deformed is substantially eliminated. Such a frame construction with suitable elastic properties can be made of a light and inexpensive material. The frame construction may be manufactured of a plastic material having the above-mentioned properties.

According to an embodiment of the invention, the frame construction comprises at least one relatively stiff portion and at least one elastic portion. The frame construction has to have a stiffness such that it is able to support the flexible loop member in a stable manner. On the other hand, it has to have elastic properties such that it can be deflected elastically within a relatively large angular range. A frame construction comprising alternating stiff portions and elastic portions may in a relatively simple manner be provided with the above mentioned properties. The stiff portion may comprise a metal material. The metal material may be a steel material. The elastic portion may comprise a rubber material. A rubber material has excellent elastic properties at the same time as it can be subjected to heavy forces without being destroyed.

According to a further embodiment of the invention, the frame construction comprises two elongated support parts adapted to support a respective end part of the flexible loop member. The use of two elongated support parts makes it possible to control the motion of the flexible loop member at a relative long distance from the outer periphery of the platform and provide a reliable motion of the flexible loop member between the retention position and the non-retention position. Advantageously, the two elongated support parts are pivotally attached by joint members to the fence arrangements defining the milking stall. The frame construction may be pivotally arranged around an axis located at substantially the middle of the longitudinal direction of the milking stall and at a vertical distance of 1,0-1,3 meters above the platform. Such a frame construction may be pivotally arranged around an axis located at a distance of 0,8 to 1,1 meters from the outer periphery of the platform. Preferably, the frame construction is pivotally arranged around an axis located at a lower lever than the heads of the animals. Since the elongated support parts of the frame construction are pivotally arranged at a relatively long distance from the outer periphery of the platform, the flexible loop member may be displaced with a relatively small turning motion of elongated support parts between the retention position and the non-retention position. The two elongated element can have a straight-line extension in parallel with the fence arrangements.

According to a further embodiment of the invention, the frame construction comprises a bridge part constituting a connection between the two elongated support parts of the frame construction. Such a connection between the two elongated support parts makes it possible to use operating means acting on one of the elongated support parts. The bridge part may comprise two relatively stiff portions and at least one elastic portion constituting a flexible joint between the relatively stiff portions. The force from the flexible loop element leads to elastic deflections of the elongated support parts. However, the elastic deflections of the elongated support parts results in a force acting on the bridge part. The elastic portion of the bridge part allows a displacement between its relatively stiff portions. The elastic portion secures that this displacement can be performed without plastic deformation of the relative stiff portions. At least one of the elongated support parts may comprise an elastic portion connected to a relatively stiff portion of the bridge part. It is a risk that high tension arises in certain areas of the frame construction. Such an area is the connection area between the elongated support portions and the bridge portion. The existence of the elastic portion of the elongated support portion allows an elastic deflection which will lower the tension in this area considerably.

According to a further embodiment of the invention, at least one part of the flexible loop member is supported by one elongated support part along substantially the whole length of the support part. In this case, the supported part of the flexible loop member can be fixedly attached to an outer surface of the elongated support part. Preferably, the supported part of the flexible loop member is arranged inside the elongated support part. Especially if the elongated support part is a tubular element, it is easy to arrange the supported part of the flexible loop member inside the tubular element.

According to a further embodiment of the invention, the two end parts of the flexible loop member are connected to the respective fence arrangements on opposite sides of the milking stall. Such a connection of the end parts of the flexible loop member makes that the main part of a force acting on the flexible loop member will be transferred to the fence arrangement. Usually, the fence arrangement has a strength such that it can take up this part of the force. Preferably, the end parts of the flexible loop member are connected to the same joint member as the elongated support part of the frame construction.

According to a further embodiment of the invention, the operating means comprises a power member connected by a connecting member to one of the elongated support parts of the frame construction. In order to move the flexible loop member between the retention position and the non-retention position, it is suitable to use a power member acting on one of the elongated support parts of the frame construction. In this case, the power member can be attached in a suitable position at a distance from the outer periphery of the platform. The power member may be a power cylinder and the connecting member may be a wire or the like which transfers the motion from the power cylinder to the elongated support part of the frame construction. Preferably, the power member is a vacuum cylinder. A vacuum cylinder can only provide a relatively small lifting force but it is an inexpensive power member. Since the frame construction according to the invention can be given a light design, it is possible to use inexpensive vacuum cylinders for lifting the frame construction. Thereby, the cost for the retention device can be low. Advantageously, the power member is mounted on a bar element in a position vertically above a fence arrangement on one side of the milking stall. In such a position, the power member obtains a simple mounting in a relatively protected position. Furthermore, it does not encroach on the space of other components in the milking stall.

### BRIEF DESCRIPTION OF THE DRAWINGS

The present invention is now to be explained more closely by means of preferred embodiments, which are disclosed as examples, and with reference to the attached drawings.
- Fig 1: shows a rotary parlour for milking of cows,

- Fig 2: shows a retention device according to a first embodiment of the invention and
- Fig 3: shows a retention device according to a second embodiment of the invention.

### BRIEF DESCRIPTION OF PREFERRED EMBODIMENTS OF THE INVENTION

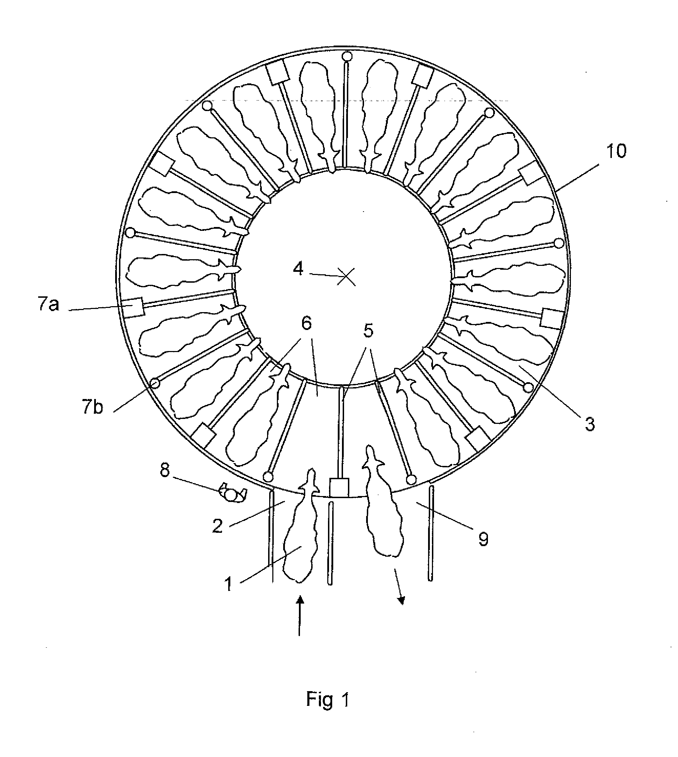

Fig 1 shows a rotary parlour for milking of cows 1. The parlour comprises a platform 3 which is rotatably arranged around a substantially vertical axis 4. A plurality of fence arrangements 5 are mounted on the platform 3. The fence arrangements 5 divide the platform 3 into milking stalls 6 for receiving individual cows 1. The cows 1 enter the milking stalls 6 from an entry area 2. The fence arrangements 5 have a substantially radial extension on the platform 3 in relation to the vertical axis 4. The fence arrangements 5 comprise a cabinet 7a or a vertical bar element 7b at an outer radial position of the platform 3. The cabinet 7a and the vertical bar element 7b constitute a strength supporting element of the respective fence arrangements 5. The cabinet 7a has an inner space, which may accommodate milking equipment and other components in the milking stall 6. In this case, the stalls 6 are arranged such that the cows face inwards from the stalls 6 and an operator 8 works from the outside of the annular platform 3. The operator 8 attaches milking members to the cows 1 entering the milking stalls 6. The cows 1 rotate nearly 360° on the platform 3. The cows 1 leave the milking stall 6 and the platform 3, via an exit area 9, after being milked and possibly fed on the platform 3. A bar arrangement 10 has an extension around the platform 3 except at the entry area 2 and the exit area 9. The bar arrangement 10 is adapted to prevent that the cows 1 in the milking stalls 6 step backwards and out of the platform 3.

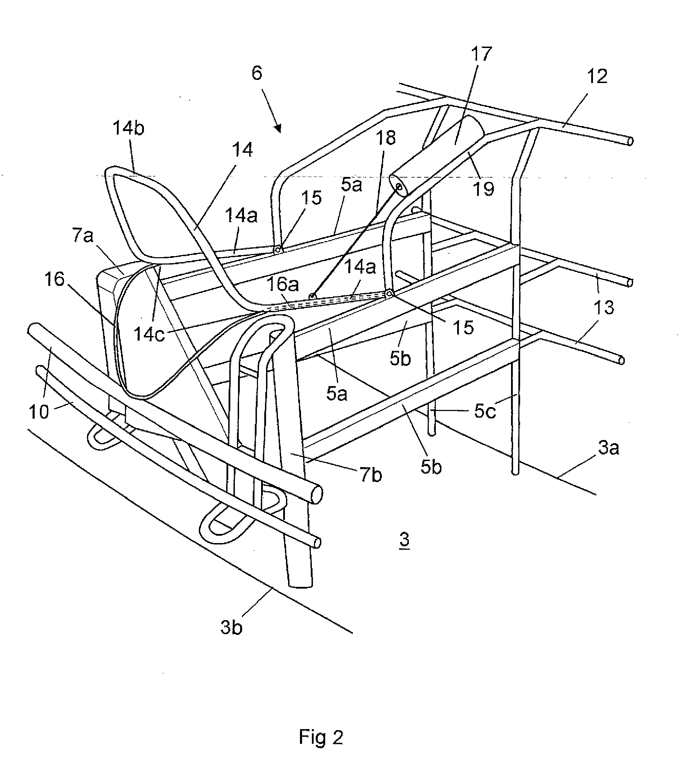

Fig 2 shows a milking stall 6 more in detail. The fence arrangement 5 comprises two bar elements 5a, 5b having a substantially horizontal extension in parallel above each other at different levels. The fence arrangement 5 located on one side of the milking stall 6 comprises except the bar elements 5a, 5b a vertical post 5c and a cabinet 7a. The vertical post 5c is fixedly attached to the platform 3 in the vicinity of an inner periphery edge 3a of the platform 3. The cabinet 7a is fixedly attached to the platform 3 in the vicinity of an outer periphery edge 3b of the platform 3. The fence arrangement 5 located on an opposite side of the milking stall 6 comprises except the bar elements 5a, 5b a vertical post 5c and a vertical bar element 7b. The vertical bar element 7b is fixedly attached to the platform 3 in the vicinity of an outer periphery edge 3b of the platform 3. A breast rail 12 is connected to an upper end of the vertical posts 5c of the respective fence arrangements 5. The breast rail 12 has a circular extension in a position substantially above the inner periphery edge 3a of the platform 3. The breast rail 12 is adapted to position the cows 1 in the stalls 6 and to prevent the cows 1 from accidentally falling or stepping into the centre of the parlour. Circular reinforcing elements 13 are connected to the vertical posts 5c in positions below the breast rail 12 but in positions above the inner periphery edge 3a of the platform 3. The circular reinforcing elements 13 provide a stiff connection between the vertical posts 5c of the fence arrangements 5 on the platform 3. The bar arrangement 10, which prevent the cows 1 to step backwards and out of the platform 3, comprises, in this case, two bar elements mounted in positions substantially vertically above the outer periphery edge 3b of the platform 3.

The milking stall 6 is provided with a retention device. The object of the retention device is to prevent that a cow 1, during certain circumstances, leaves the milking stall 6 when it reaches the exit area 9. The cow 1 reaches the exit area 9 after nearly one revolution on the platform 3. Normally, the retention device prevents a cow 1 to leave the milking stall 6 and enter the exit area 9 during circumstances such as the milking process of the cow 1 not has been finished. In this case, the retention device makes it possible to continue the milking process of the cow 1 during a second revolution on the platform 3. The retention devices make it possible to increase the speed of the platform 3 and thereby the efficiency of the rotary milking parlour.

The retention device comprises a frame construction 14. The frame construction 14 comprises two elongated support parts 14a. The elongated support parts 14a are arranged in parallel and they have a substantially straight-line extension. The frame construction 14 comprises a bridge part 14b constituting a connection between the elongated support parts 14a. The bridge part 14b has a substantially U-shaped form. The bridge part 14b is connected to an end of the respective elongated support parts 14a.The elongated support parts 14a are, at an opposite end, connected to a respective joint member 15. The joint members 15 are mounted on the upper bar elements 5a of the fence arrangements 5 on opposite sides of the milking stall 6. The frame element 14 is pivotally arranged in the milking stall 6 by means of the joint members 15.

The frame construction 14 is adapted to support a flexible loop member 16. The flexible loop member 16 may, for example, be a flexible steel wire. The loop member 16 protrudes a bit out of the outer periphery edge 3b of the platform 3 during rotation of the platform 3. Therefore, it is suitable that the loop member 16 is flexible by safety reasons. The object of the frame construction 14 is to provide a stiffening of the flexible loop member 16 such that it can be pivotally arranged around an axis located at a relatively long distance from the outer periphery edge 3b of the platform. The elongated support parts 14a are adapted to receive and support a respective end part 16a of the flexible loop member 16. The support parts 14a are tubular. The end parts 16a of the flexible loop member are adapted to be arranged inside the tubular support parts 14a. The end parts 16a of the flexible loop member have an extension inside substantially the whole length of the elongated support parts 14a. The end parts 16a of the flexible loop member have an extension from an inlet hole 14c of the support parts 14a to the joint member 15. The end parts 16a of the flexible loop member are connected to the respective joint members 15.

The retaining device comprises operating means in the form of a vacuum cylinder 17 and a wire 18. The wire 18 is, at one end, connected to a not visible piston of the vacuum cylinder 17 and, at an opposite end, connected to one of the elongated support parts 14a at a distance from the joint member 15, The vacuum cylinder 17 is adapted to turn the frame construction 14 in relation to the joint members 15 between a retention position and a non-retention position. In the retention position, the flexible loop member 16 is lowered behind a rear part of a cow 1 in the milking stall 6 such that the flexible loop member 16 prevents the cow from leaving the milking stall. In the non-retention position, the flexible loop member 16 is raised to a level above the head of the cow such that the cow 1 is free to leave the milking stall 6. The vacuum cylinder may be controlled by a control unit. The control unit may control a valve member which alternatively connects the vacuum cylinder to a vacuum pressure source or ambient pressure.

When a vacant milking stall 6 reaches the entry area 2, the retention device is adapted to be in a non-retention position. The vacuum cylinder 17 and the wire 18 hold the frame construction 14 and the flexible loop member 16 in a raised position such that a cow 1 can enter the vacant milking stall 6. An operator 8, located on the inside of the platform 3, attaches a milking member to the teats of the cow 1. The platform 3 may rotate with a constant low speed during the milking process of the cow 1. The milking members are removed from the cow 1 when the milking process is finished. Usually, the milking process has been finished before the milking stall 6 and the cow 1 reach the exit area 9. In this case, the retention device is set in a non-retention position such the cow 1 is free to leave the milking stall 6 and enter the exit area 9. If the milking process not has been finished when the cow 1 and the milking stall 6 reach the exit area 9, the retention device is adapted to be set in the retention position. The vacuum cylinder 17 is activated such that it turns the frame construction 14 around the joint member 15 in a direction such the flexible loop member 16 is lowered behind the cow 1 in the milking stall 6. In this position, the flexible loop member 16 prevents the cow 1 from leaving the milking stall 6.

However, if a cow 1 tries to leave the milking stall 6 when the retention device is in the retention position, it can apply a heavy force to the loop member 16. Such a force is transmitted from the flexible loop member 16, via its end parts 16a and the joint members 15, to the fence arrangements 5. The cabinet 7a and the vertical element 7b of the fence arrangements 5 have a strength such the fence arrangement 5 can take up a radial component of this force. However, such a force has many times a force component deviating from a completely radial force component. This deviating force component tends to give the flexible end parts 16a of the loop member an inclination in relation the radial direction of the platform 3. In such a case, the end parts 16a of the loop member exerts a force on the elongated support parts 14a which tends to deflect the elongated support elements 14a.

In conventional retention devices, the frame construction is made of relatively thin tubular elements of a metal material such as steel. It is here a risk that the frame construction is plastically deformed by the above-mentioned forces from the loop member 16. One way to solve this problem is to use thicker tubular elements in the frame construction. However, this results in an increased weight of the frame construction 14. If the frame construction 14 will be too heavy, it is not possible to use non-expensive vacuum cylinders 17 as operating members of the retention device.

However, the inclination of the end parts 16b of the flexible loop member is limited by several parameters. Such parameters are, for example, the position of the end parts of the flexible loop member in a non-loaded state, the width of the milking stall 6 and the width of the cows 1. Consequently, it is possible to estimate a limited area of the end parts 16a of the flexible loop member in a loaded state in relation to its position in a non-loaded state. According to the invention, the frame construction 14 is provided with elastic properties such that the elongated support parts 14a of the frame construction are able to be displaced by the end parts 16a of the flexible loop member to all positions within such a limited area by means of elastic deflection. Since the elongated support parts 14a are able to deflect elastically to all possible position, the risk that the frame construction will be plastically deformed is substantially eliminated. Consequently, the frame construction 14 will be returned to its originally shaped as soon as the force acting on the flexible loop element 16 ceases. The frame construction 14 in Fig. 2 is made in one piece of a tubular bar element. The tubular bar element can be made of a suitable material having good flexible properties. However, the frame element 14 has to have a stiffness such that it is able to support the flexible loop member 16 in a stable manner. The frame construction may be manufactured of a plastic material or any other material having the above-mentioned properties.

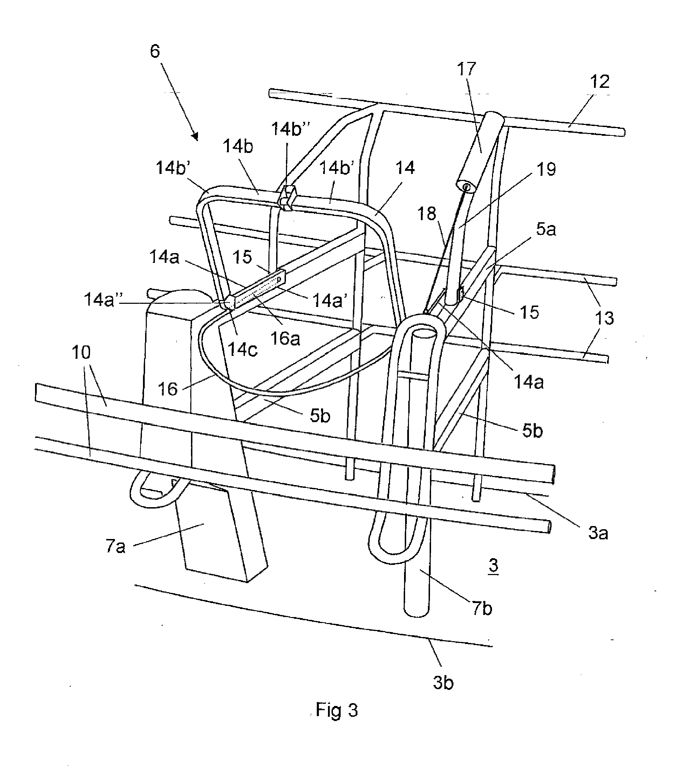

Fig. 3 shows an alternative embodiment of the frame construction. In this case, the elongated support parts 14a of the frame construction comprise each one relatively stiff portion 14a' and one elastic portion 14a". The relatively stiff portion 14a' may be made of a metal material and the elastic portion 14a" may be made of a rubber material or a suitable plastic material. However, it is possible to use other materials having the above-mentioned properties. The relatively stiff portions 14a' of the elongated support portions are connected to the joint members 15. The frame construction 14 comprises a bridge part 14b comprising two relatively stiff portions 14b' and one elastic portion 14b" constituting a flexible joint between the relatively stiff portions 14b'. The elastic portion 14b" comprising a number of flexible element of a rubber material or a plastic material which are arranged between two plate shaped members. The relatively stiff portions 14b' of the bridge part 14b are each connected to an elastic portion 14a" of a respective elongated support part 14a. The end parts 16a of the flexible loop member are adapted to be arranged inside the tubular support parts 14a. The end parts 16a of the flexible loop member have an extension inside substantially the whole length of the elongated support parts 14a. The end parts 16a of the flexible loop member have an extension from an inlet hole 14c of the elastic portions 14a" of the elongated support parts to the joint member 15. The end parts 16a of the flexible loop member are connected to the respective joint members 15.

During use of this embodiment, a force from a cow acting on the flexible loop member 16 is transferred to the end parts 16a of the flexible loop member. The end parts 16 a of the flexible loop member exert a force on the elongated support parts 14a. In this case, the elastic properties of the elastic portions 14a" of the elongated support part allow a displacement to all possible position within the limited area. The displacement of the elastic portion 14a" leads to a force acting on the rigid portions 14b' of the bridge part. However, the elastic portion 14b", which is arranged between the substantially rigid portions 14b' of the bridge part, allow mutual displacement motions between the rigid portions 14b'. Also in this case, the frame construction 14 has elastic properties such that it is able to deflect elastically to all possible position within a limited area. Consequently, the frame construction 14 will return to its original shape as soon as the force acting on the flexible loop member 14 ceases. Thus, thee risk that the frame construction 14 will be plastically deformed is substantially eliminated.

The invention is not restricted to the described embodiments in the figures, but may be varied freely within the scope of the claims.

## Claims

1. A retention device for a rotary milking parlour, wherein the rotary parlour comprises an annular platform (3) and fence arrangements (5) adapted to divide the platform (3) into milking stalls (6) for receiving individual animals (1), wherein the retention device comprises a flexible loop member (16), a frame construction (14) having at least one support part (14a) adapted to support a part (16a) of the flexible loop member (16) such that the frame construction (14) supports the flexible loop member (16), and operating means (17, 18) adapted to move the frame construction (14) between a retention position in which the flexible loop member (16) prevents an animal (1) from leaving the milking stall (6) and a non-retention position in which an animal (1) is allowed to leave the milking stall (6), and wherein an animal (1) in the milking stall is able to apply a force on the flexible loop member (16) when it is in the retention position, **characterised in that** the supported part (16a) of the loop member is displaceable to different positions within a limited area by said force of an animal in the milking stall, wherein the frame construction is provided with elastic properties such that the support part (14a) of the frame construction is able to be displaced by the supported part (16a) of the flexible loop member to all positions within said limited area by means of elastic deflection such that the frame construction returns to its original shape when the force ceases.

2. A retention device according to claim 1, **characterised in that** the frame construction (14) comprises at least one relatively stiff portion (14a', 14b') and at least one elastic portion (14a", 14b").

3. A retention device according to claim 2, **characterised in that** the stiff portion (14a', 14b') comprises a metal material.

4. A retention device according to claim 2 or 3, **characterised in that** the elastic portion (14a", 14b") comprises a rubber material or a plastic material.

5. A retention device according to any one of the preceding claims, **characterised in that** the frame construction (14) comprises two elongated support parts (14a) adapted to support a respective end part (16a) of the flexible loop member.

6. A retention device according to claim 5, **characterised in that** the two elongated support parts (14a) are pivotally attached by joint members (15) to the fence arrangements (5) defining the milking stall.

7. A retention device according to claim 6, **characterised in that** the frame construction (14) provides stiffness to the flexible loop member (16) such that it is pivotally arranged around an axis (15) located at substantially the middle of the longitudinal direction of the milking stall (6) and at a vertical distance of 1,0-1,3 meters above the platform (3).

8. A retention device according to any one of the claims 5 to 7, **characterised in that** the frame construction (14) comprises a bridge part (14b) constituting a connection between the two elongated support parts (14a) of the frame construction.

9. A retention device according to claim 2 and 8, **characterised in that** the bridge part (14b) comprises two relatively stiff portions (14b') and at least one elastic portion (14b") constituting a flexible joint between the relatively stiff portions (14b').

10. A retention device according to claim 2 and 8 or 9, **characterised in that** at least one of the elongated support parts (14a) comprises an elastic portion (14a") connected to a relatively stiff portion (14b') of the bridge part.

11. A retention device according to any one of the preceding claims 5 to 9, **characterised in that** at least one end part (16a) of the flexible loop member is supported by one elongated support part (14a) of the frame construction along substantially the whole length of the support part (14a).

12. A retention device according to claim 11, **characterised in that** said end part (16a) of the flexible loop member is arranged inside the elongated support part (14a).

13. A retention device according to any one of the claims 5 to 12, **characterised in that** the two end parts (16a) of the flexible loop member are connected to the respective fence arrangements (5) on opposite sides of the milking stall (6).

14. A retention device according to any one of the preceding claims, **characterised in that** the operating means comprises a power member (17) connected by a connecting member (18) to one of the elongated support parts (14a) of the frame construction.

15. A retention device according to claim 14, **characterised in that** the power member is a vacuum cylinder (17).

16. A retention device according to claim 14 or 15, **characterised in that** the power member (17) is mounted on a bar element (19) in a position vertically above a fence arrangement (5) on one side of the milking stall (6).
